# EUROPÄISCHE PATENTANMELDUNG

(11) **EP 1 337 070 A2**
(43) Veröffentlichungstag der Anmeldung: **20.08.2003**
(21) Anmeldenummer: 03002271.9
(22) Anmeldetag: 01.02.2003
(51) Int. Cl.: H04L 5/20

(54) **Phantomschaltung für Übertragung in einem lokalen integrierten Daten- und Telefonnetz**

(30) Priorität: 13.02.2002 DE 10205797
(71) Anmelder: Merten GmbH & Co. KG, 51674 Wiehl (DE)
(72) Erfinder: Ludolf, Wilhelm S., Dr. Ing., 72622 Nürtingen (DE); Kuhnert, Jürgen, Dipl.-Ing., 51702 Bergneustadt (DE); Bergmann, Jörgen, Dipl.-Ing., 51674 Wiehl (DE)
(74) Vertreter: Selting, Günther, Dipl.-Ing.

(57) **Zusammenfassung**

In einem lokalen integrierten Daten- und Telefonnetz erfolgt die Telefonübertragung über Zweidrahtleitungen und die Datenübertragung über Vierdrahtleitungen. Um über existierende Vierdrahtleitungen (26) beide Signale gleichzeitig übertragen zu können, wird die Phantom-Technik eingesetzt, bei der an den Enden der Vierdrahtleitung (26) jeweils ein Funktionsnetzwerk installiert wird. Auf diese Weise wird der physischen Vierdrahtleitung eine virtuelle Zweidrahtleitung hinzugefügt. Die Erfindung ist insbesondere anwendbar in Fällen, in denen Vierdrahtleitungen als Telefonleitungen installiert sind. Sie ermöglicht es, zusätzlich zu dem Telefonnetz ein Datennetz aufzubauen, ohne dass zusätzliche Leitungsinstallationen vorgenommen werden müssen.

## Beschreibung

Die Erfindung betrifft ein lokales integriertes Daten- und Telefonnetz mit Anschlussvorrichtungen, die untereinander installationsseitig durch Vierdrahtleitungen verbunden sind.

Die verbreiteten Schnittstellen einer LAN-Verkabelung (LAN: Local Area Network) für Übertragungsraten von zehn Mbit/s bzw. hundert Mbit/s benutzen ein Adernpaar Tₓ für das Senden und ein Adernpaar Rₓ für das Empfangen. Als Übertragungsmedium werden in der Regel Datenkabel mit paarweise verdrillten Leitungen, sogenannte TP-Kabel, eingesetzt (TP: Twisted Pair). Sehr häufig sind im Privatbereich Vierdrahtleitungen als vierdrähtige Kabel im Gebrauch, wobei ein Leitungspaar für Telefon benutzt ist und das zweite Paar noch frei ist. Das vorhandene freie Leitungspaar reicht aber nicht aus, um einen gewünschten weiteren Dienst, z. B. Ethernet-LAN, in gewohnter Technik realisieren zu können, da hierzu insgesamt zwei freie Aderpaare notwendig wären. Folglich müsste entweder ein weiteres Kabelpaar parallel verlegt oder aber das vorhandene Kabel durch ein neues mit einer größeren Aderzahl ersetzt werden.

Der Erfindung liegt die Aufgabe zugrunde, ein lokales integriertes Daten- und Telefonnetz zu schaffen, das für die Vernetzung mit Vierdrahtleitungen auskommt und imstande ist, Datengeräte und Telefone gemeinsam zu vernetzen.

Die Lösung dieser Aufgabe erfolgt erfindungsgemäß mit den im Patentanspruch 1 angegebenen Merkmalen.

Das erfindungsgemäße Daten- und Telefonnetz ermöglicht die Signalübertragung in Form von Daten- und Telefonsignalen bidirektional über Vierdrahtleitungen, ohne dass die einzelnen Signale sich gegenseitig beeinträchtigen. Dabei wird davon ausgegangen, dass für die Datenübertragung zum Senden und Empfangen jeweils ein zweipoliger Anschluss erforderlich ist und zusätzlich ein zweipoliger Anschluss für die Telefonkommunikation benötigt wird. Obwohl hier eigentlich für die getrennte und gegenseitig unbeeinflusste Signalübertragung sechs Drähte (drei mal zwei Adern) erforderlich wären, wird erfindungsgemäß unter Anwendung der sogenannten Phantom-Technik ein Adernpaar eingespart. Hierzu enthält jede Anschlussvorrichtung ein Funktionsnetzwerk, das als passive elektrische Schaltung ausgebildet ist und die beiden Zweidrahtleitungen, aus denen die Vierdrahtleitung besteht, gemeinsam nutzt, so dass zu jeder Zweidrahtleitung gewissermaßen eine dritte Leitung (Phantom-Leitung) hinzugefügt wird, die zwar funktionell vorhanden ist, physisch jedoch nicht existiert. Diese Phantom-Technik erlaubt die Anwendung der üblichen Vierdraht-Technik, bei der ein Aderpaar für Senden und ein Aderpaar für Empfangen benutzt wird, und fügt zwei virtuelle Adern hinzu, die für die Telefonübertragung benutzt werden können. Es ist aber auch möglich die Zuweisung der einzelnen Übertragungsinhalte zu den Aderpaaren anders vorzunehmen und beispielsweise über das Phantom-Aderpaar Daten, z. B. für das Senden, zu übertragen. An beiden Endpunkten der Übertragungsstrecke befinden sich derartige Funktionsnetzwerke, die den Übergang zwischen Vierdraht- und dreifacher Zweidraht-Technik bewerkstelligen und somit eine Schnittstelle bilden, die an allen Anschlusspunkten des Netzwerks gleich ausgebildet ist und als Standardteil bereitgestellt werden kann.

Generell ist es zweckmäßig, das gesamte Daten- und Telefonnetz passiv zu gestalten, so dass keine Verstärkerelemente enthalten sind. Es ist aber auch möglich, eine aktive Netzstruktur in dieser Technik zu verwenden.

Die Erfindung ermöglicht es, mit einer Verkabelung, die ursprünglich für eine private Telefonanlage (TK-Anlage) realisiert wurde, zusätzlich ein privates Datennetzwerk aufzubauen, ohne dass neue Kabel verlegt werden müssen. So kann beispielsweise überall dort, wo bereits ein Telefonanschluss mit Vierdrahtleitung liegt, zusätzlich ein Datenanschluss, wie z. B. ein Breitband-Internetzugang, ohne die Notwendigkeit zusätzlicher Kabel bereitgestellt werden. Der ursprüngliche Telefonanschluss bleibt dabei in seiner Funktionalität voll erhalten.

Gemäß einer bevorzugten Weiterbildung der Erfindung werden diejenigen Anschlüsse der Anschlussvorrichtung, die den körperlich vorhandenen Aderpaaren der Vierdrahtleitung entsprechen, den beiden Datenkanälen zugeordnet, während der dritte Anschluss, dem eine virtuelle zweidrähtige Übertragungsleitung zugeordnet ist, ein Telefonanschluss ist.

Damit die den einzelnen Übertragungskanälen zugewiesenen Aufgaben mit der notwendigen Übertragungssicherheit ausgeführt werden, müssen gegenüber den üblichen Anwendungen der Phantom-Technik einige weitere Maßnahmen ergriffen werden. Bei der Datenübertragung kommen hochbitratige Signale zum Einsatz, die fehlerfrei übertragen und empfangen werden sollen. Dabei ist dem Signal-zu-Rauschverhältnis, das sich bei der digitalen Übertragung unmittelbar in der Bit-Fehlerrate niederschlägt, besondere Aufmerksamkeit zu schenken. Deshalb ist es für die Übertragungsqualität von Vorteil, die äquivalente Rauschbandbreite im Betrieb zu verringern und für eine Verbesserung des Signal/Rauschverhältnisses zu sorgen. Hierzu werden die jeweiligen Übertragungswege mit Filtern versehen. In den gleichspannungsgekoppelten (virtuellen) Zweigen sind Filter mit entsprechenden Übertragungsfunktionen einzusetzen. Beispielsweise wird für die Telefon-Übertragungsstrecke ein Tiefpassfilter eingesetzt, welches das Telefonband durchlässt, das hochfrequentere Band der Datenübertragung jedoch sperrt. Andererseits kommen für die Datenübertragungswege Bandpassoder Hochpassfilter in Betracht, die das Telefonband sperren.

Da bei der Phantom-Technik die virtuellen Leitungsadern gleichspannungsgekoppelt ausgeführt werden können, sind sie auch in der Lage, neben einem Wechselspannungssignal zusätzlich eine Gleichspannung zu übertragen. Diese Gleichspannung kann dazu benutzt werden, Signale auszulösen, wie beispielsweise Klingeltöne, das Schalten eines Relais, das Anzeigen eines Zustandes u. dgl.

Bekannte Ausführungen von Phantom-Schaltungen werden in der Regel mit Hilfe von Übertragern bzw. mit Induktivitäten oder Widerständen ausgeführt. Die Erfindung geht jedoch von einem allgemeineren Ansatz aus, der dem heutigen Stand der Schaltungstechnik und den Bedürfnissen bei der Realisierung derartiger Schaltungen Rechnung trägt. So kann eine geeignete Einspeisung durch folgende Maßnahmen realisiert werden. Jedes physikalische Adernpaar der Benutzerseite oder Geräteseite wird über ein Funktionsnetzwerk an die Vierdrahtleitung angekoppelt. Jedes Funktionsnetzwerk beinhaltet die Funktionen "Entkoppeln" und "potentialfreies Trennen" sowie die Funktionen "differentielle Einspeisung" und "Gleichtakteinspeisung". Diese Funktionen können sowohl in getrennten Einheiten realisiert werden als auch in einer einzigen Einheit zusammengefasst werden.

Das Funktionsnetzwerk mit Potentialtrennung kann grundsätzlich auf unterschiedliche Weisen aufgebaut werden. So sind auch aktive Lösungen möglich mit Transistoren, Dioden und Operationsverstärkern. Passive Lösungen enthalten Kapazitäten, Induktivitäten bzw. Übertrager oder Widerstände. Die symmetrische Einspeisung kann sowohl über resistive als auch über induktive oder kapazitive Bauteile erfolgen. Wichtig ist lediglich, dass auf beiden physikalischen Adern ein entsprechender Gleichtaktbetrieb aufgeprägt wird.

Die niedrigere Bitrate wird vorzugsweise auf dem virtuellen Übertragungsweg befördert. Dagegen werden Daten mit annähernd gleichen Bitraten auf den beiden physischen Leitungen übertragen. Eine Anwendung für hochbitratige Datensignale ist das Ethernet. Niedrigbitratige Signale sind Telefonsignale oder Bussignale der Gebäudesystemtechnik.

Der Begriff "Daten- und Telefonnetz" ist im Rahmen der vorliegenden Anmeldung breit zu verstehen. Er umfasst auch beispielsweise ein Netz mit nur zwei Teilnehmern, die durch eine einzige Vierdrahtleitung miteinander verbunden sind.

Im folgenden werden Ausführungsbeispiele der Erfindung unter Bezugnahme auf die Zeichnungen näher erläutert.

Es zeigen:
- Fig. 1: ein lokales integriertes Daten- und Telefonnetz mit zwei Teilnehmerstellen, die durch eine Vierdrahtleitung verbunden sind,
- Fig. 2: eine Darstellung eines sternförmigen Netzes,
- Fig. 3: ein Ausführungsbeispiel der Phantom-Technik,
- Fig. 4: eine erste Ausführungsform einer Anschlussvorrichtung, bei der das Funktionsnetzwerk als selbständige Einheit vorgesehen ist,
- Fig. 5: ein zweites Ausführungsbeispiel, bei dem das Funktionsnetzwerk in einer Anschlussdose für den Anschluss von Datenleitungen und Telefonleitungen enthalten ist, und
- Fig. 6: ein Ausführungsbeispiel, bei dem die Funktionseinheit in einem Adapter enthalten ist, der in eine Datenanschlussdose eingesteckt werden kann.

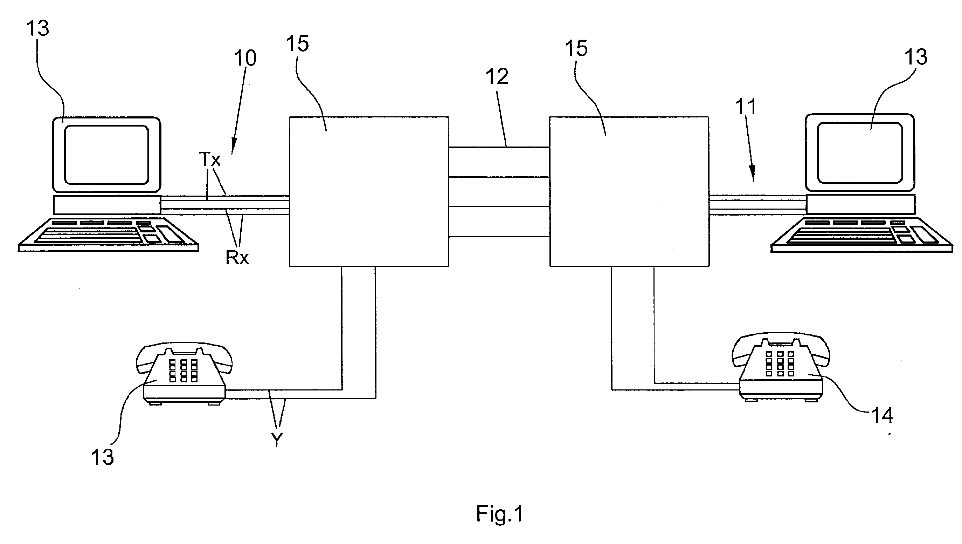

Fig. 1 zeigt ein lokales integriertes Daten- und Telefonnetz mit zwei Teilnehmerstellen 10 und 11, die durch eine Vierdrahtleitung 12 miteinander verbunden sind. Die Vierdrahtleitung 12 besteht beispielsweise aus einem Kabel oder aus zwei jeweils verdrillten Zweidrahtleitungen. An jeder Teilnehmerstelle befindet sich ein Datengerät 13, beispielsweise ein Computer, und ein Telefon 14 oder ein ähnliches Gerät mit für das Telefonnetz spezifischen Eigenschaften, beispielsweise ein Faxgerät. Das Datengerät 13 und das Telefongerät 14 sind an eine Anschlussvorrichtung 15 angeschlossen, die den Übergabepunkt zu der Vierdrahtleitung 12 bildet.

Das Datengerät 13 ist über zwei Zweidrahtleitungen Tₓ, Rₓ mit dem benutzerseitigen Teil der Anschlussvorrichtung 15 verbunden. Das Telefongerät 14 ist über eine Zweidrahtleitung Y mit dem benutzerseitigen Teil der Anschlussvorrichtung 15 verbunden.

Die beiden Teilnehmerstellen 10 und 11 sind grundsätzlich einander gleich aufgebaut. Die Datengeräte 13 können über die Vierdrahtleitung 12 miteinander in beiden Richtungen kommunizieren, und gleichzeitig können die Telefongeräte 14 über die Vierdrahtleitung miteinander kommunizieren.

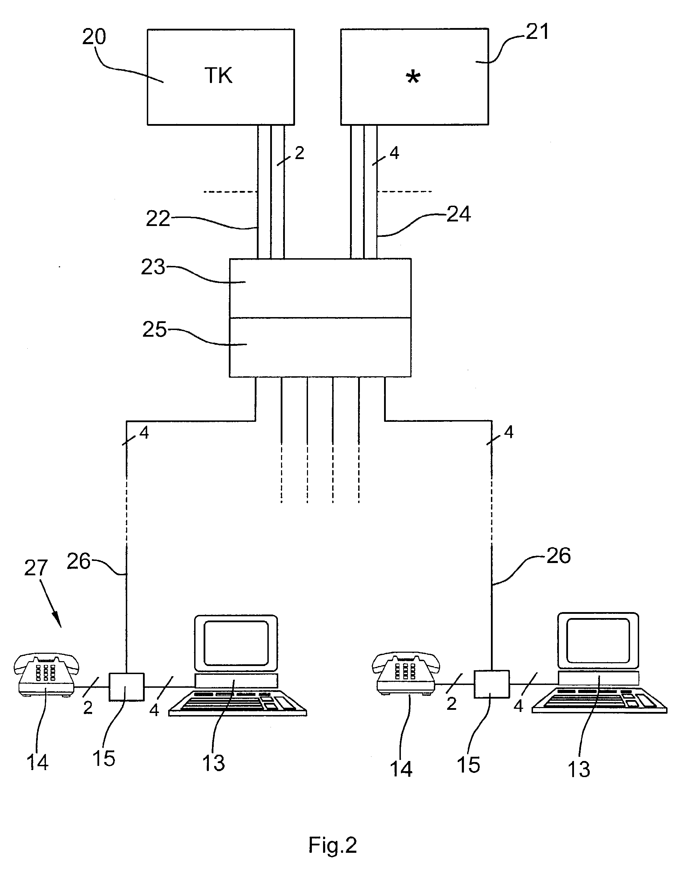

Ein komplexeres Daten- und Telefonnetz ist in Fig. 2 dargestellt. Eine Telekommunikationsanlage (TK-Anlage) 20, die auch als Nebenstellenanlage bezeichnet werden kann, ist an das öffentliche Telefonnetz (nicht dargestellt) angeschlossen. Ebenso ist an das öffentliche Telefonnetz oder ein anderes Hochgeschwindigkeitsnetz ein Sternkoppler 21 angeschlossen, der durch einen Hub, Switch oder Router gebildet werden kann. Die TK-Anlage 20 weist für jedes Telefongerät 14 eine Zweidrahtleitung 22 auf, die zu einem Rangierfeld 23 führt. Der Sternkoppler 21 weist für jedes Datengerät 13 des Netzes eine Vierdrahtleitung 24 auf, die ebenfalls mit dem Rangierfeld 23 verbunden ist. Dem Rangierfeld 23 ist ein Konverter 25 zugeordnet, der für jedes Paar aus Datengerät und Telefongerät ein Funktionsnetzwerk enthält, das im folgenden noch erläutert wird.

Von dem Konverter 25 führt jeweils eine Vierdrahtleitung 26 zu jeder Teilnehmerstelle 27. Die Teilnehmerstelle 27 enthält ein Datengerät 13, ein Telefongerät 14 und eine Anschlussvorrichtung 15, die das Datengerät 13 und das Telefongerät 14 mit der Vierdrahtleitung 26 verbindet. Die Vierdrahtleitungen 26 sind Bestandteil der Elektroinstallation des Gebäudes.

In den Zeichnungen ist die Anzahl der in den Kabeln enthaltenen Drähte oder Adern jeweils durch die Zahl "2" oder "4" bezeichnet, wobei die zugehörige Leitung mit einem Schrägstrich durchkreuzt ist.

Über das lokale integrierte Daten- und Telefonnetz kann jedes der Telefongeräte 14 mit jedem anderen Telefongerät des Netzes kommunizieren und außerdem auch mit dem an die TK-Anlage 20 angeschlossenen öffentlichen Netz. Ferner kann jedes der Datengeräte 13 mit jedem anderen Datengerät kommunizieren und ferner über den Sternkoppler 21 auch mit externen Datengeräten.

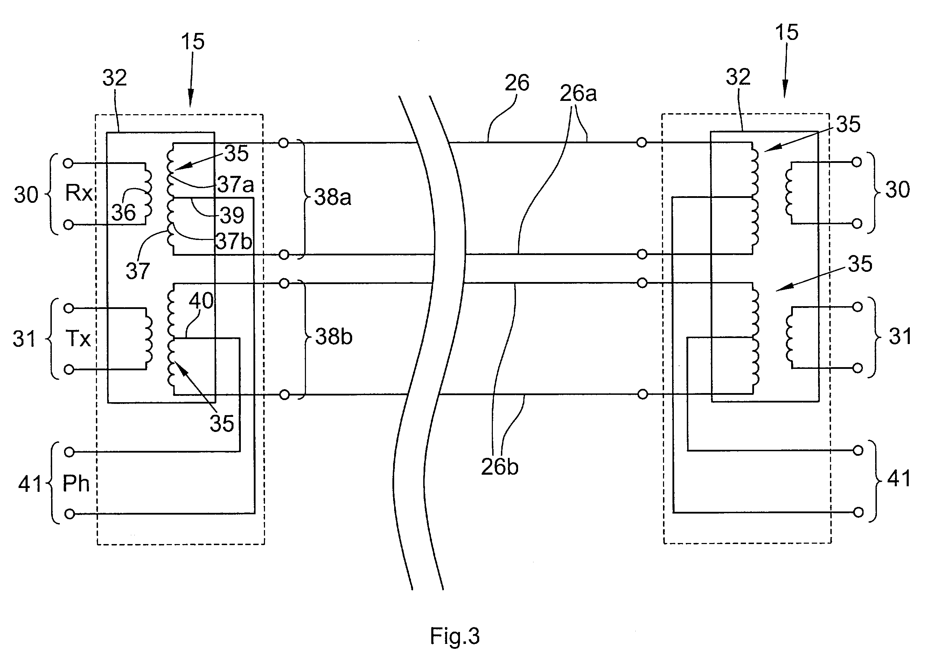

Fig. 3 zeigt zwei Anschlussvorrichtungen 15, die durch eine installationsseitige Vierdrahtleitung 26 untereinander verbunden sind, zur Erläuterung der Phantom-Technik. Jede Anschlussvorrichtung weist benutzerseitig zwei zweipolige Datenanschlüsse 30, 31 auf, von denen der Anschluss 30 als Rₓ-Anschluss für den Datentransport zum Datengerät 13, also für den Empfang, bestimmt ist und der Anschluss 31 als Tₓ-Anschluss für die Fortleitung der von dem Datengerät kommenden Daten, also zum Senden. Die Anschlüsse 30 und 31 sind mit einem Funktionsnetzwerk 32 verbunden, welches den Phantom-Umsetzer bildet. Das Funktionsnetzwerk 32 enthält für jeden dieser Anschlüsse einen Übertrager 35 mit einer ersten Spule 36, die mit den Polen des benutzerseitigen Anschlusses (hier: Anschluss 30) verbunden ist, und einer zweiten Spule 37 aus zwei symmetrischen Spulenhälften 37a, 37b. Beide Spulenhälften 37a und 37b bilden in Reihe geschaltet die Pole des Anschlusses 38a für die eine Zweidrahtleitung 26a der Vierdrahtleitung 36. Der Anschluss 38b für die andere Zweidrahtleitung 26b wird in gleicher Weise von den beiden Spulenhälften des anderen Übertragers 35 gebildet. Auf diese Weise erfolgt im Übertrager eine Potenzialtrennung. Das Potenzial der die beiden zweiten Spulen 37 enthaltenden Schaltung wird durch dasjenige Potenzial festgelegt, das an den Mittelabgriff 39 angelegt wird. Die beiden Mittelabgriffe 39 und 40 sind mit den Polen des Anschlusses 41 verbunden, der hier den Telefonanschluss Ph bildet. Auf diese Weise kann durch Festlegen der Bezugspotenziale der beiden Zweidrahtleitungen 26a und 26b ein virtuelles drittes Aderpaar gewonnen werden. In der selben Weise, in der die Signale am Eingangsteil des Datenübertragungsweges zusammengestellt werden, werden sie am Ausgangsteil, an dem sich ein entsprechendes Funktionsnetzwerk 32 befindet, wieder auseinandergenommen und an die Datenanschlüsse 30, 31 sowie den Telefonanschluss 41 verteilt.

Der Konverter 25 in Fig. 2 enthält für jede Teilnehmerstelle ein Funktionsnetzwerk 32, so dass er über die Vierdrahtleitung 26 und zwei weitere virtuelle Adern mit der Anschlussvorrichtung 15 jeder Teilnehmerstelle kommunizieren kann.

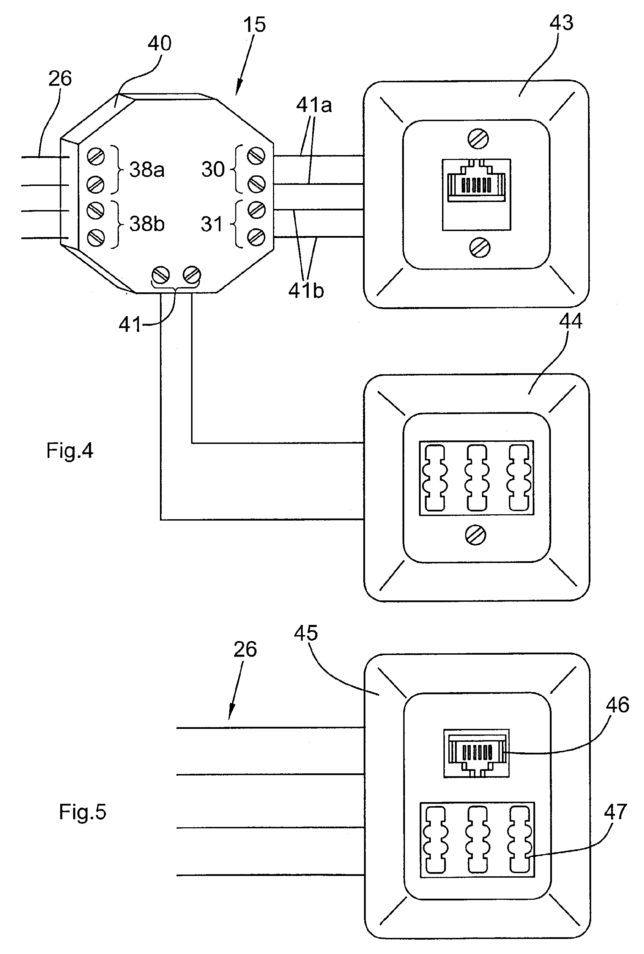

Fig. 4 zeigt den mechanischen Aufbau der Anschlussvorrichtung 15, die in einem separaten Gehäuse 48 in Form einer "Pille" untergebracht ist, die in einer Unterputzdose Platz findet und das Funktionsnetzwerk 32 enthält. Die einzelnen zweipoligen Anschlüsse 30, 31, 38a, 38b und 41 sind in der selben Weise bezeichnet wie in Fig. 3. Die Vierdrahtleitung 26 ist an die Installationsseite der Anschlussvorrichtung angeschlossen, und an die Benutzerseite ist über ein Kabel, das die Zweidrahtleitungen 41a und 41b enthält, eine Datenanschlussdose 43 angeschlossen. Auf der Benutzerseite kann ferner an eine Zweidrahtleitung 42, die mit dem Telefonanschluss 41 verbunden ist, eine Telefonanschlussdose 44 angeschlossen werden. Die betreffenden benutzerseitigen Leitungen sind relative kurze Kabel.

Fig. 5 zeigt eine kombinierte Anschlussdose 45 mit einer Anschlussbuchse 46 für das Kabel eines Datengerätes und einer Anschlussbuchse 47 für das Kabel eines Telefongerätes. Die kombinierte Anschlussdose 45 ist unmittelbar mit der Vierdrahtleitung 26 verbunden, und sie enthält das Funktionsnetzwerk.

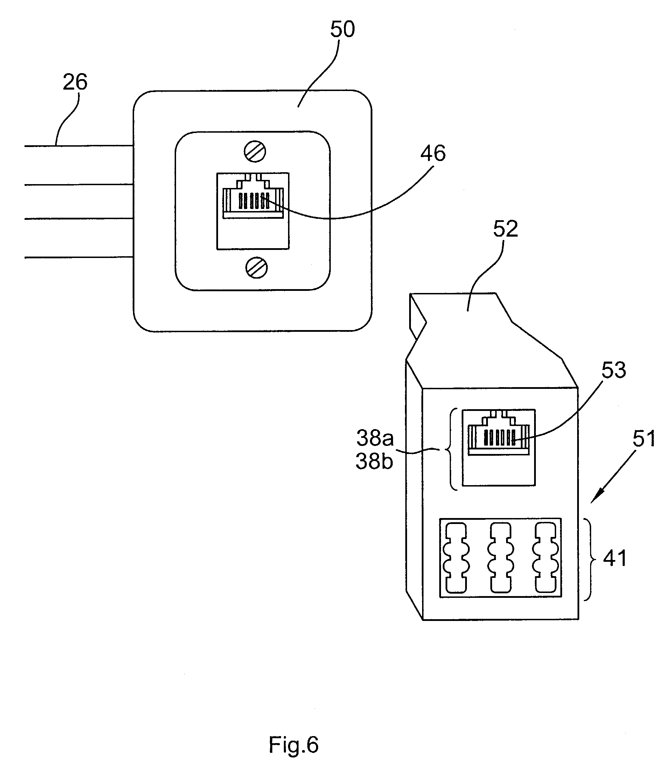

Fig. 6 zeigt eine Adapterlösung, bei der an die Vierdrahtleitung 26 eine übliche Datenanschlussdose 50 angeschlossen ist, die eine vierpolige Anschlussbuchse 46 für das vierpolige Kabel eines Datengerätes aufweist. Ein Adapter 51 bildet eine selbständige Einheit mit einem Steckerteil 52, das in die Anschlussbuchse 46 passend eingesteckt werden kann. Der Adapter 51 enthält den Funktionsteil 32 und eine Anschlussbuchse 53 für ein vieradriges Datenkabel sowie eine Anschlussbuchse 41 für ein zweiadriges Telefonkabel. Diese Adapterlösung hat den Vorteil, dass die Anschlussvorrichtung 15 wahlweise entweder nur für ein Datengerät oder, in Verbindung mit dem Adapter, für ein Datengerät und ein Telefongerät benutzt werden kann. Ein wesentlicher Vorteil besteht darin, dass mit der Adapterlösung bestehende vieradrige Datenleitungen leicht für den sechsadrigen Betrieb umgerüstet werden können, ohne dass irgendwelche Installationsarbeiten durchgeführt werden müssen. Es genügt, an beide Enden der Vierdrahtleitung 26 den Adapter 51 anzustecken.

## Patentansprüche

1. Lokales integriertes Daten- und Telefonnetz mit Anschlussvorrichtungen (15), die untereinander installationsseitig durch Vierdrahtleitungen (26) verbunden sind und jeweils benutzerseitig zwei zweipolige Datenanschlüsse (30,31) und einen zweipoligen Telefonanschluss (41) aufweisen, wobei jede Anschlussvorrichtung (15) installationsseitig zwei mit der Vierdrahtleitung (26) verbundene zweipolige Anschlüsse (38a,38b) aufweist und ein Funktionsnetzwerk (32) enthält, das in Phantom-Technik Wechselstromsignale zwischen den drei benutzerseitigen Datenanschlüssen (30,31,41) und den beiden installationsseitigen Anschlüssen (38a,38b) selektiv überträgt.

2. Lokales integriertes Daten- und Telefonnetz, **dadurch gekennzeichnet, dass** zwei der drei benutzerseitigen Anschlüsse (30,31,41), die jeweils direkt mit einem der installationsseitigen beiden Anschlüsse (38a,38b) gekoppelt sind, Datenanschlüsse (30,31) für jeweils unidirektionale Übertragung sind und dass der dritte benutzerseitige Anschluss (41), der mit beiden installationsseitigen Anschlüssen gekoppelt ist, ein Telefonanschluss ist.

3. Lokales integriertes Daten- und Telefonnetz nach Anspruch 1 oder 2, **dadurch gekennzeichnet, dass** mindestens einer der drei benutzerseitigen Anschlüsse (30,31,41) ein Bandpass-, Hochpass- oder Tiefpassfilter enthält.

4. Lokales integriertes Daten- und Telefonnetz nach einem der Ansprüche 1 - 3, **dadurch gekennzeichnet, dass** das Funktionsnetzwerk (32) in die Anschlussvorrichtung (15) integriert ist (Fig. 5).

5. Lokales integriertes Daten- und Telefonnetz nach einem der Ansprüche 1 - 3, **dadurch gekennzeichnet, dass** das Funktionsnetzwerk (32) in einem separaten Gehäuse (48) untergebracht ist, das mit Anschlussdosen (43, 44) für Datengeräte und Telefongeräte verbindbar ist.

6. Lokales integriertes Daten- und Telefonnetz nach einem der Ansprüche 1 - 3, **dadurch gekennzeichnet, dass** das Funktionsnetzwerk (32) in einem Adapter (51) enthalten ist, der an eine vierpolige Datenanschlussdose (50) ansteckbar ist und an eine vierpolige Anschlussbuchse (53) für ein Datenkabel und eine zweipolige Anschlussbuchse (41) für ein Telefonkabel aufweist.
